# EUROPEAN PATENT APPLICATION

(11) **EP 1 541 523 A1**
(43) Date of publication of application: **15.06.2005**
(21) Application number: 03794265.3
(22) Date of filing: 05.09.2003
(51) Int. Cl.: B82B 1/00, B82B 3/00, G01N 37/00, C01B 37/02, B01J 19/00

(54) **NANOCHANNEL STRUCTURE CONTAINING FUNCTIONAL MOLECULE AND THIN FILM THEREOF**

(30) Priority: 05.09.2002 JP 2002260500
(71) Applicant: Tokyo University of Pharmacy and Life Science, Tokyo 192-0392 (JP)
(72) Inventor: UCHIDA, Tatsuya, Tachikawa-shi, Tokyo 190-0022 (JP); FUJIWARA, Kitao, Saitama 336-0018 (JP)
(74) Representative: Calamita, Roberto
(86) International application number: PCT/JP2003/011386
(87) International publication number: WO 2004/022479

(57) **Abstract**

A nanochannel structure with an oxide layer containing a surfactant micelle contains a functional molecule in a nanochannel. There is provided a new application as a functional material to a substance having a nanometer-sized pore by the technique on a hydrophobic site which is brought by the presence of the surfactant that is used during the production of the substance.

## Description

### Technical Field

The invention of this application relates to a nanochannel structure containing a functional molecule and to a method for manufacturing the same. More particularly, the invention of this application relates to a novel functional structure in which a functional molecule useful in broad areas of medicine, hygiene, industry, agriculture, environment evaluation and the like as analytical chip (device) and sensor for biochemical analysis, analysis of minor constituents, etc. or microreactor and the like is contained in a pore (nanochannel) and to a method for manufacturing the same.

### Background Art

Paying attention to a nanometer-sized pore, preparation of such a pore (mesoporous) substance has been investigated already. In the investigation up to now, hydrolysis of an alkoxysilane compound has been carried out in the presence of surfactant whereby a substance having pore is formed using the surfactant as a template. For example, as the prior art, there have been reported preparation of a mesoporous substance on a mica substrate (Document 1), preparation of a mesoporous thin film by evaporation of solvent (Document 2), functionalization by patterning of mesoporous thin film and a silane coupling agent (Document 3), etc.
Document 1: Hong Yang, et al., *Nature,* vol. 379, 22 Feb. 1996, p. 703-705
Document 2: Yun Feng Lu, et al., *Nature,* vol. 389, 25 Sep 1997, p. 364-368
Document 3: Hongyou Fan, et al., *Nature,* vol. 405, 4 May 2000, p. 56-60

However, in spite of the investigations as such for example, although a substance having nanometer-sized pores and technical development of thin film thereof as a functional material have been suggested for application, etc. as pH sensor already, it is the actual status that there has been nearly no progress yet.

One of the reasons therefor is that, in prior art, although surfactant is used as a template for the formation of pore, such a surfactant is removed by sintering and no attention is paid for hydrophobic site by the surfactant. For the development as a functional material, the hydrophobic site is to receive public attention much more.

Under such circumstances, the invention of this application has been conducted in view of the above circumstances and its object is that, with regard to a substance having nanometer-sized pore, attention is paid to hydrophobic site which is given by the presence of a surfactant used for its production process and there is provided a novel technical means by which its development as a functional material is made possible.

### Disclosure of the Invention

The invention of this application is to solve the above problems and, firstly, in a nanochannel substance in which an oxide layer contains a surfactant micelle, it provides a nanochannel structure containing a functional molecule, characterized in that, a functional molecule is contained in the nanochannel.

Secondly, it provides a nanochannel structure containing a functional molecule which is characterized in that the oxide layer mainly comprises silicon oxide; thirdly, it provides a nanochannel structure containing a functional molecule which is characterized in that the functional molecule is a chelate molecule; fourthly, it provides a nanochannel thin film containing a functional molecule which is characterized in that any of the nanochannel structure is arranged in a form of thin film on a solid substrate; and, fifthly, it provides a nanochannel thin film containing a functional molecule which is characterized in that the nanochannel is sedimented in many layers on a solid substrate in a three-dimensional manner.

Sixthly, the invention of this application provides a method for the manufacture of a nanochannel structure containing a functional molecule, characterized in that, an acidic aqueous solution of alcohol containing a surfactant and an alkoxide compound which is able to form an oxide is heated so that a nanochannel substance where an oxide layer contains a surfactant micelle is formed and then a functional molecule is impregnated in the nanochannel substance; and, seventhly, it provides a method for the manufacture of nanochannel thin film containing a functional molecule, characterized in that, heating is conducted on a solid substrate to form a nanochannel substance on its surface and then a functional molecule is impregnated in the nanochannel substance.

### Brief Description of the Drawings

Fig. 1 is a drawing which shows the result of X-ray diffraction for thin film of a nanochannel structure in the Example.
Fig. 2 is a drawing which shows a picture of a powder sample under a transmission electron microscope.
Fig. 3 is a drawing which schematically shows thin film of a nanochannel structure.
Fig. 4 is a drawing which exemplifies the relation between TEOS content and film thickness in the Example.
Fig. 5 is a drawing which shows a molecular structure of pyrene.
Fig. 6 is a drawing which exemplifies a fluorescence spectrum of pyrene captured by a thin film in relation to concentration of pyrene.
Fig. 7 is a drawing which exemplifies the dependency of intensity of fluorescence of thin film on concentration of pyrene.
Fig. 8 is a drawing which exemplifies fluorescence spectra of pyrene captured in nanochannel and pyrene in chloroform.
Fig. 9 is a drawing which shows a molecular structure of 8-quinolinol-5-2sulfonic acid (Qs).
Fig. 10 is a drawing which exemplifies a fluorescence spectrum of Qs captured in a nanochannel from aqueous solutions of different concentrations.
Fig. 11 is a drawing which exemplifies dependency of intensity of fluorescence of thin film on Qs concentration.
Fig. 12 is a drawing which exemplifies the effect of suppression of elution of a surfactant micelle by addition of MPS as a hydrophobically treating agent as changes of frequency in quartz oscillator with lapse of time.

### Best Mode for Carrying Out the Invention

The invention of this application has the above-mentioned characteristic and its embodiments will be illustrated as hereunder.

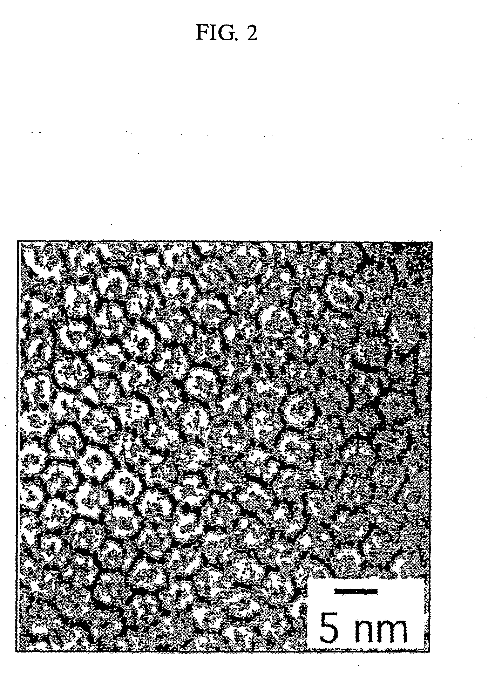

The most characteristic thing is that, in the invention of this application, as to a nanochannel structure, an oxide layer contains a surfactant micelle and holds the inside of nanochannel as a hydrophobic site and further that various functional molecules are contained in the hydrophobic site. As will be schematically shown as the case of silica layer in the Examples which will be mentioned later, a nanochannel structure which makes such a specific structure possible is considered, for example, as a constitution of Fig. 2.

As mentioned above, in the invention of this application, the nanochannel structure is able to be prepared from an alkoxide compound being able to form an oxide and an acidic alcohol containing a surfactant as materials by means of heating or drying so that the oxide layer contains a surfactant micelle. When the material concentration of the above solution is relatively diluted, micelle is formed during the process of evaporation to dryness and acts as a template whereby a nanochannel structure is formed. On the other hand, when the material concentration is concentrated, material and the like are fused at high temperature with high pressure and, during the process, a nanochannel structure is formed.

With regard to an alkoxide compound which is able to form an oxide in that case, various things may be used so far as it forms an oxide layer of a nanochannel structure. For example, representatively, silicon alkoxide may be exemplified as that which forms a silicon oxide layer and, besides it, alkoxides of various things such as titanium, zirconium, hafnium, tantalum, niobium, gallium and rare earth elements may be taken into consideration.

With regard to a surfactant which is used together with the alkoxides, various things may be used and, for example, the representative one is a surfactant of a quaternary ammonium salt type as an ionic surfactant. That of a sulfonic acid type may be exemplified as well. That of a nonionic surfactant of a polyether type may be used as well. One of the most advantageous things is a cationic quaternary ammonium salt type.

With regard to the ratio of an alkoxide compound to a surfactant used, that may vary depending upon the types of them and, although it is not particularly limitative, from 0.01 to 0.5 may be generally adopted as a yardstick in terms of a molar ratio a surfactant to an alkoxide compound.

An alkoxide compound and a surfactant are mixed and heated in an acidic aqueous solution. Heating temperature at that time may be until a refluxing temperature. In order to give an acidic condition, it is possible to mix hydrochloric acid, sulfuric acid or an organic acid. It is preferred that a low-boiling alcohol such as ethanol, propanol or methanol is made co-present in an aqueous solution.

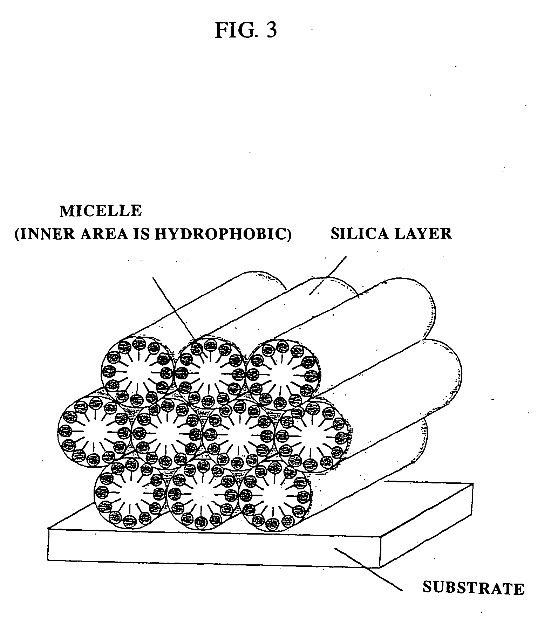

It is also possible that, after heating, the solution is developed on a solid substrate or the solution is heated on the solid substrate. As such, a thin substance of a nanochannel structure as schematically shown in Fig. 3 is prepared. That may be called thin film. Needless to say, a solid substrate may be that in various types. That may be a ceramics substrate such as mica and alumina or may be a substrate of metal or an organic polymer.

In both cases where a solid substrate is used and where it is not used, a nanochannel structure may be made into superfine particles in a form of nanoparticles.

A nanochannel structure containing a surfactant micelle which is able to be prepared by the above mentioned process for example is contained in an oxide layer and a functional molecule is then able to be impregnated into the micelle or, in other words, in nanochannel. The impregnation as such is able to be carried out easily using a solution of a functional molecule.

It goes without saying that the functional molecule may be in any type. For example, various ones such as fluorescent molecule, chelate molecule and bioreactive molecule may be taken into consideration. It is also possible to use macromolecular substances and biological substances such as DNA, protein and enzyme. Depending upon type and use of a functional derivative, a nanochannel structure containing a functional molecule according to the invention of this application provides a useful material which has not been known yet.

The invention of this application also provides a method for retention of hydrophobicity of the above-mentioned nanochannel structure. Thus, when the above-mentioned nanochannel structure is dipped in water or in an aqueous solution, a part of surfactant micelle contained in the nanochannel (pore) is eluted to water or the aqueous solution whereby hydrophobicity in the nanochannel may lower with the lapse of time. Therefore, in such a case, inner wall of the nanochannel is previously made hydrophobic so that a hydrophobic interaction between the surfactant micelle and the inner wall is increased whereby elution of the surfactant micelle into water or the aqueous solution is suppressed.

In a hydrophobic treatment as such in the invention of this application, it is possible to use an agent for making hydrophobic taking its affinity to the nanochannel substance into consideration. For example, when the nanochannel substance is constituted from silicon oxide, an appropriate silane coupling agent or, more specifically, a silane coupling agent having a mercaptopropyl group is able to be considered as an appropriate one.

With regard to the condition for the treatment of making hydrophobic as such, it may be appropriately selected on an experimental basis. As to a more appropriate method, it may be taken into consideration that, in the manufacture of a nanochannel structure of nanochannel film according to the invention of this application as mentioned above, the above-mentioned treating agent for making hydrophobic is contained by adding together with a surfactant during the formation of a nanochannel substance.

With regard to an adding ratio of the alkoxide compound and the surfactant for the formation of a nanochannel substance, it is taken into consideration, for example, that molar ratio of an agent for making hydrophobic such as a silane coupling agent is made from about 0.3- to 1.2-fold to the former and from about 3- to 20-fold to the latter.

The mode for carrying out the invention will now be illustrated in more detail by way of the following Examples. It goes without saying that the invention is not limited by those Examples.

### Examples

In accordance with the following procedure, a thin film of a silica-surfactant complex having a pore (nanochannel) structure of a nanometer size was prepared using a surface-active molecule aggregate (micelle) as a template. In addition, a hydrophobic circumstance in nanochannel by micelle was utilized so that various functional molecules were captured in nanochannel from an aqueous solution. As a result, it is now possible that a novel function is easily given to a thin film.

### 1. Manufacture of thin film

### <Preparation of solution for the manufacture of thin film>

### • Composition (molar ratio) of the solution was made as follows.

TEOS : EtOH : H₂O : HCl : CTAB = 1:8.8:5.0:0.004:0.075
CTAB = cetyltrimethylammonium bromide
TEOS = tetraethyl orthosilicate

(1) EtOH (9.7 mL), TEOS (12.3 mL) and 2.78 × 10⁻³ M HCl (1 ml) were mixed and refluxed at 60°C for 90 minutes.
(2) To the solution after refluxing were added EtOH (18.4 mL), CTAB (1.519 g) and 5.48 × 10⁻² M HCl (4 mL) followed by stirring for 30 minutes.

### <Manufacture of thin film>

(1) A thin film solution (350 µL) obtained by the above preparation was dropped onto a washed and dried glass substrate and
(2) subjected to a rotary application (by a spin-coat method) (at 4,000 rpm for 30 seconds).

### <Drying of thin film>

After the spin coating, it was dried for 1 hour at ambient temperature.

### <Treatment with alkali> (Neutralization of HCl contained in the thin film)

### • Alkaline buffer used (NH₄Cl-NH₃)

0.1 M NH₄Cl and 0.1 M aqueous solution of NH₃ were mixed (pH: about 10).
(1) Dried thin film was dipped in an alkaline buffer for 20 minutes.
(2) The alkaline buffer was rinsed together with substituting with ultrapure water and dipped in ultrapure water for 20 minutes.

### 2. Characterization of thin film

### <X-ray diffraction>

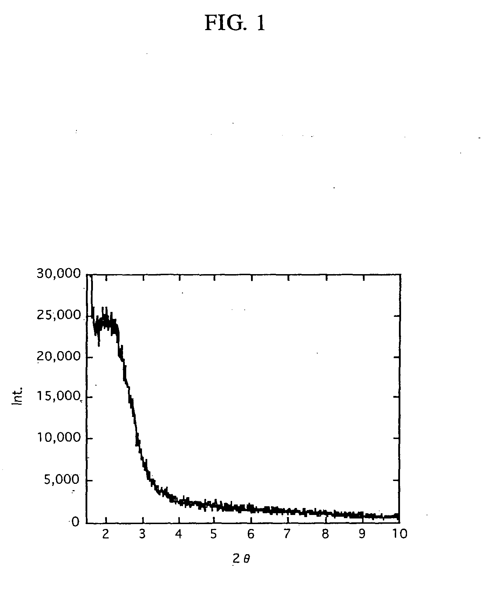

For the thin film prepared in the above process, Fig. 1 shows the result of its X-ray diffraction and Fig. 2 shows picture of powdery sample under a transmission electron microscope. A clear peak was noted at 2θ = ca. 2.0 and a periodical structure of nanometer order was formed in the thin film. When nanochannel is presumed to have a honeycomb structure as shown in Fig. 2, distance between the adjacent channels determined from the 2θ value was calculated to be 4.15 nm. When thickness of silica wall is 1 nm, pore size of the channel is presumed to be about 3 nm. It was also confirmed from the simultaneous measurement of X-ray diffraction and differential scanning calorie that surface-active molecular is present in the channel until 300°C and there is no significant change in a micro-order structure.

### <Film thickness>

Film thickness obtained by measurement of difference in level by an atomic force microscope and ellipsometry is nearly the same and is about 390 nm. Next, a solution for the preparation of thin film was diluted with ethanol and control of the thin film was attempted. In Fig. 3, film thickness was plotted to mole fraction of TEOS in the solution for the preparation of thin film. It was made clear that the film thickness was nearly proportional to the content of TEOS.

### 3. Presence of functional molecules

### <Pyrene>

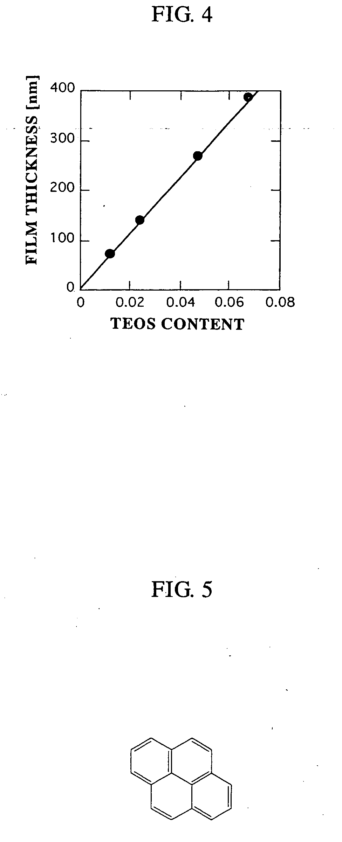

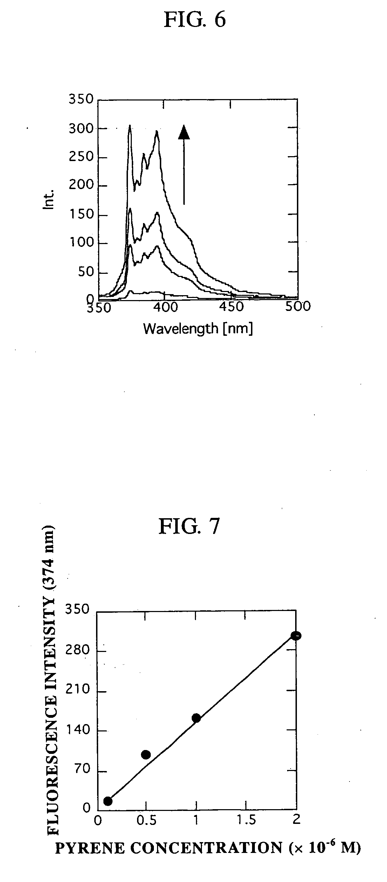

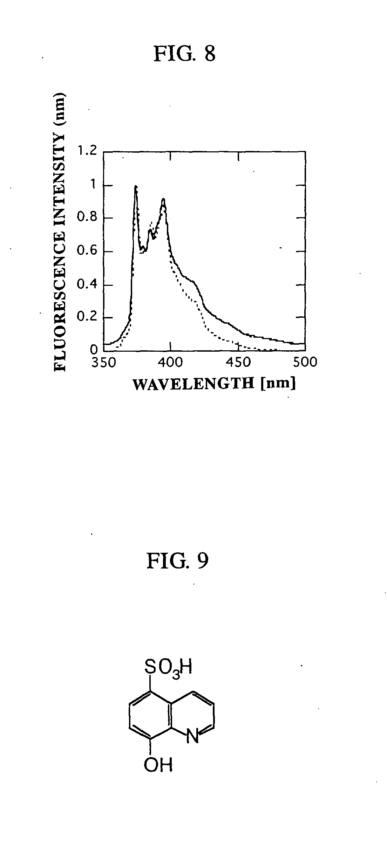

Capture of pyrene (Fig. 5) which has been known as a fluorescent functional molecule to nanochannel was attempted. Aqueous solutions of pyrene having different concentrations were prepared and the above-mentioned thin film was dipped for 20 minutes. After drying with air, fluorescence from the thin film was measured by a fluorometer. The result is shown in Fig. 6 and Fig. 7. It was noted that, when pyrene concentration in the aqueous solution increased as 0.1, 0.5, 1.0 and 2.0 µM, fluorescence intensity increased accordingly. As shown in Fig. 8, fluorescence spectrum (solid line) of pyrene captured in nanochannel well coincides to fluorescence spectrum (dotted line) in a chloroform solution and is clearly different from the spectrum in an aqueous solution or that adsorbed with glass surface. In general, oscillation structure in fluorescence spectrum of pyrene sensibly reflects the polar environment near molecule. Therefore, it is noted that pyrene is not adsorbed with glass surface but is captured in the channel. It is also judged to be nearly in the same degree as hydrophobic environmental chloroform in nanochannel and captured in the film by a hydrophobic interaction of micelle-pyrene in the channel.

### <8-Quinolinol-5-sulfonic acid>

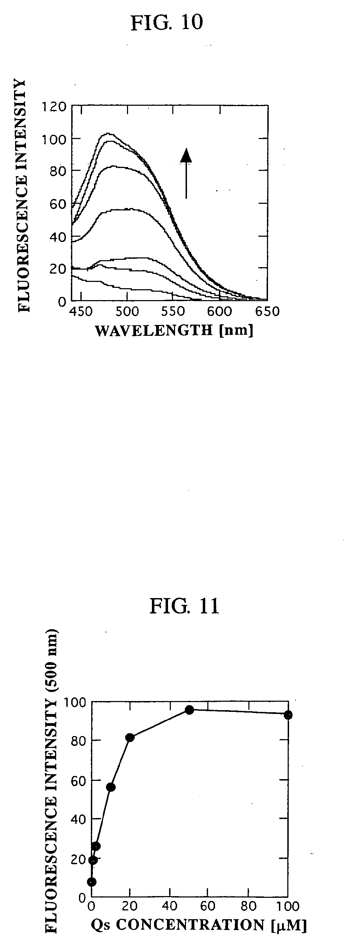

It was attempted to capture 8-quinolinol-5-sulfonic acid (Fig. 9; hereinafter, referred to as Qs) which has been well known as a fluorescent chelate molecule for luminous detection of metal ion to nanochannel. Aqueous solutions having different concentrations were prepared and thin film was dipped therein for 20 minutes. After drying with air, fluorescence from the thin film was measured by a fluorometer. The result is shown in Fig. 10 and Fig. 11. Emission of light from Qs captured in thin film increased together with Qs concentration in a dipped solution and it is noted to reach saturation at about 50 µM. The result shows that, even when a highly polar functional group is present in a molecule, it is captured in a hydrophobic environment in nanochannel by a hydrophobic site in a molecule and it has been proved that various functional organic molecules are able to be captured and accumulated in nanospace.

### 4. Hydrophobic treatment

In the preparation of thin film in the above-mentioned 1., MPS (3-mercaptopropyl trimethoxysilane) was added to a solution for the preparation of thin film in the following rate.

### <Molar ratio>

(A) TEOS : MPS : CTAB = 1:1:0.075
(B) TEOS : MPS : CTAB = 1:0.1:0.075

Each of the solutions (A) and (B) for the preparation of thin film was dropped onto a gold electrode followed by drying whereupon thin film of nanochannel substance was fixed on a quartz oscillator gold electrode.

This was allowed to stand in ultrapure water and changes in frequency with lapse of time were measured by QCM (quartz oscillator microbalance method).

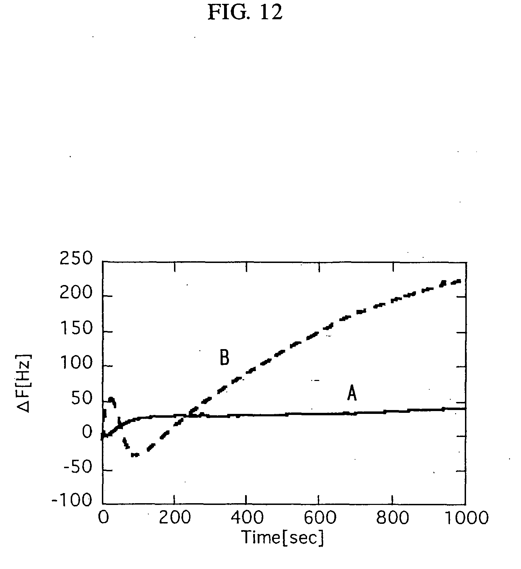

The result is exemplified in Fig. 12.

From Fig. 12, it is noted that, when adding amount of MPS is small (B), frequency is not stable but increases. That means the surfactant micelle is eluted into water whereby mass decreases. On the other hand, when adding amount of MPS is large (A), it is noted that frequency is stable. The above-mentioned elution of micelle is suppressed.

When the micelle is eluted (B), hydrophobic site in pores of nanochannel is disintegrated whereby captured amount of the functional molecule decreases but, when elution is suppressed, the hydrophobic site in the pore is able to be maintained.

Incidentally, with regard to addition of MPS, it has been confirmed to be preferred in the above-mentioned case that the molar ratio to TEOS is made 0.5 or more and that the molar ratio to CTAB is made 5-fold or more.

### Industrial Applicability

As illustrated in detail hereinabove, in accordance with the invention of this application, there is provided a new technical means by which a development as a functional material is made possible to a substance having a nanometer-sized pore by the technique on a hydrophobic site which is brought by the presence of the surfactant that is used during the production of the substance.

## Claims

1. In a nanochannel substance in which an oxide layer contains a surfactant micelle, a nanochannel structure containing a functional molecule, **characterized in that**, a functional molecule is contained in the nanochannel.

2. The nanochannel structure containing a functional molecule according to claim 1, wherein the oxide layer mainly comprises silicon oxide.

3. The nanochannel structure containing a functional molecule according to claim 1, wherein the functional molecule is a chelate molecule.

4. The nanochannel structure containing a functional molecule according to claim 1, wherein the nanochannel substance is subjected to a treatment of making it hydrophobic.

5. The nanochannel structure containing a functional molecule according to claim 4, wherein the nanochannel substance contains an agent for making hydrophobic.

6. The nanochannel structure containing a functional molecule according to claim 5, wherein the nanochannel substance in which the oxide layer mainly comprises silicon oxide contains a silane coupling agent.

7. A nanochannel thin film containing a functional molecule which is **characterized in that** any of the nanochannel structures mentioned in claims 1 to 6 is arranged in a form of thin film on a solid substrate.

8. The nanochannel thin film containing a functional molecule according to claim 7, wherein the nanochannel is sedimented in many layers on a solid substrate in a three-dimensional manner.

9. A method for the manufacture of a nanochannel structure containing a functional molecule, **characterized in that**, a nanochannel substance where an oxide layer contains a surfactant micelle is formed from an acidic aqueous solution of alcohol containing a surfactant and an alkoxide compound which is able to form an oxide and then a functional molecule is impregnated in the nanochannel substance

10. The method for the manufacture of a nanochannel structure containing a functional molecule according to claim 9, wherein a hydrophobically treating agent is added to the acidic aqueous solution of alcohol.

11. The method for the manufacture of a nanochannel structure containing a functional molecule according to claim 10, wherein heating or drying is conducted on a solid substrate to form a nanochannel substance on its surface and then a functional molecule is impregnated in the nanochannel substance.
